# EUROPEAN PATENT APPLICATION

(11) **EP 4 826 434 A1**
(43) Date of publication of application: **21.10.2026**
(21) Application number: 25907663.6
(22) Date of filing: 25.08.2025
(51) Int. Cl.: G02B 27/01, G02B 27/00

(54) **HEAD-UP DISPLAY**

(30) Priority: 18.12.2024 KR 20240190174
(71) Applicant: LG Electronics Inc., Yeongdeungpo-gu Seoul 07336 (KR)
(72) Inventor: KWEON, Ohjin, Seoul 07796 (KR)
(74) Representative: Vossius & Partner Patentanwälte Rechtsanwälte mbB
(86) International application number: PCT/KR2025/012945
(87) International publication number: WO 2026/134525

(57) **Abstract**

A head-up display comprises a main body; a plurality of image generation units disposed on the main body; a screen on which a plurality of images generated by the plurality of image generation units are formed and which reflects the plurality of images toward a windshield; and a processor configured to control the plurality of image generation units. The plurality of image generation units may form an identical image on the screen. The processor may adjust a spacing between the identical images formed on the screen to variably control a virtual image distance.

## Description

### [Technical Field]

The present invention relates to a head-up display.

### [Background Art]

A head-up display is a device provided in a vehicle and configured to emit image light toward a windshield of the vehicle. The vehicular head-up display may display various types of information including driving information during driving of the vehicle.

The head-up display includes a display panel configured to generate and output image light, and at least one mirror by which the image light generated by the display panel is reflected.

The image light generated by the display panel may be incident on the windshield of the vehicle by the mirror, and a driver may recognize a virtual image positioned in front of the windshield.

Korean Patent Registration Publication No. 10-2467924 B1 (Nov. 17, 2022) discloses a vehicular head-up display.

The vehicular head-up display includes: a housing in which an inner space is formed and which is disposed below a windshield; an image device accommodated in the inner space and configured to emit first linearly polarized light in a first direction; an inner mirror disposed in the inner space to be spaced apart from the image device and configured to reflect the first linearly polarized light in the first direction emitted from the image device; a polarizing film configured to transmit the first linearly polarized light reflected from the inner mirror and reflect second linearly polarized light in a second direction orthogonal to the first direction; and a phase retardation mirror disposed outside the inner space and configured to phase-convert the first linearly polarized light, which has been reflected from the inner mirror and transmitted through the polarizing film, into the second linearly polarized light and emit the second linearly polarized light toward the polarizing film, wherein the second linearly polarized light emitted from the phase retardation mirror is reflected toward the windshield by the polarizing film, and the first linearly polarized light reflected from the inner mirror passes through the polarizing film and then travels toward the windshield.

### [Disclosure]

### [Technical Problem]

The present embodiment is directed to providing a head-up display capable of simply varying a distance of a virtual image by using a plurality of image generation units and a screen.

### [Technical Solution]

A head-up display comprises a main body; a plurality of image generation units disposed on the main body; a screen on which a plurality of images generated by the plurality of image generation units are formed and which reflects the plurality of images toward a windshield; and a processor configured to control the plurality of image generation units. The plurality of image generation units may form an identical image on the screen. The processor may adjust a spacing between the identical images formed on the screen to variably control a virtual image distance.

The plurality of image generation units may be spaced apart from each other along a longitudinal side of the main body.

Each of the plurality of image generation units may be eccentrically disposed on the main body.

The plurality of image generation units may be disposed opposite to each other along a longitudinal side of the main body with respect to a central axis of the screen.

The plurality of image generation units may generate images on the screen such that a left eye of a driver and a right eye of the driver are cross-matched with respect to a central axis of the screen.

The plurality of image generation units may generate images on the screen such that a virtual image is generated between a driver and a windshield.

The plurality of images may have different diffusion angles from each other.

The plurality of image generation units may generate images such that images of individual images respectively correspond to a left eye of a driver and a right eye of the driver.

The processor may determine a state of an object from an image received from a front camera.

When display of information related to the state of the object is required, the processor variably may change the spacing between images displayed on the screen according to a distance to the object based on a determined result.

A plurality of identical images generated from the plurality of image generation units may be displayed on the screen while being spaced apart from each other, and the spacing between the plurality of images may correspond to the virtual image distance.

As the spacing becomes larger, the virtual image distance may become farther.

As the spacing becomes smaller, the virtual image distance may become nearer.

The processor may adjust the spacing between images formed on the screen to variably change the virtual image distance in real time.

The processor may analyze an image received through a front camera to determine information of an object, determine a distance to the object, and calculate the spacing between a plurality of images formed on the screen based on a result of the distance to the object.

The processor may generate images corresponding to a plurality of objects and calculate spacings between the images formed on the screen corresponding to the plurality of objects as different spacings.

Each of the plurality of image generation units may comprise a projection optical system.

Each of the plurality of image generation units may comprise a MENS optical system.

### [Advantageous Effect]

According to the present embodiment, the screen and the plurality of image generation units are spaced apart from each other, and the plurality of image generation units may be disposed outside the main body, so that the size of the main body can be minimized and the utilization of space inside the vehicle can be improved.

In addition, the processor can variably control a virtual image distance by simple control of adjusting a spacing between identical images formed on the screen.

In addition, the plurality of image generation units are disposed opposite to each other along a longitudinal side of the main body with respect to a central axis of the screen, so that the plurality of images can be stably projected onto the screen.

In addition, a distance to an object can be calculated from an image received from a front camera, and the virtual image distance can be varied by varying the spacing between images displayed on the screen.

In addition, spacings between images formed on the screen corresponding to a plurality of objects can be calculated as different spacings, and a plurality of virtual images can be displayed together at different virtual image distances.

### [Description of Drawings]

FIG. 1 is a side view illustrating a state in which one example of the head-up display according to the present embodiment displays an image,
FIG. 2 is a perspective view of one example of the head-up display according to the present embodiment,
FIG. 3 is a cross-sectional view of a screen according to the present embodiment,
FIG. 4 illustrates a state in which a spacing between images formed on the screen according to the present embodiment is narrow,
FIG. 5 illustrates a state in which a spacing between images formed on the screen according to the present embodiment is wide,
FIG. 6 is a control block diagram of the head-up display according to the present embodiment,
FIG. 7 is a plan view illustrating images formed on the screen according to the present embodiment,
FIG. 8 illustrates a state in which a virtual image of an object displayed by the head-up display according to the present embodiment is visible through the windshield,
FIG. 9 is a plan view illustrating a virtual image distance of the head-up display according to the present embodiment,
FIG. 10 is a plan view illustrating a state in which only a left image generation unit projects an image in one example of the head-up display according to the present embodiment,
FIG. 11 is a plan view illustrating a state in which only a right image generation unit projects an image in one example of the head-up display according to the present embodiment,
FIG. 12 is a plan view illustrating a state in which one example of the head-up display according to the present embodiment forms a virtual image between a driver and a windshield,
FIG. 13 is a side view illustrating a state in which one example of the head-up display according to the present embodiment forms a virtual image between a driver and the windshield,
FIG. 14 is a perspective view of the other example of the head-up display according to the present embodiment,
FIG. 15 illustrates one example of a MENS optical system of the other example of the head-up display according to the present embodiment,
FIG. 16 illustrates a modified example of the MENS optical system of the other example of the head-up display according to the present embodiment.

### [Best Mode]

Hereinafter, specific embodiments of the present disclosure will be described in detail with reference to the drawings.

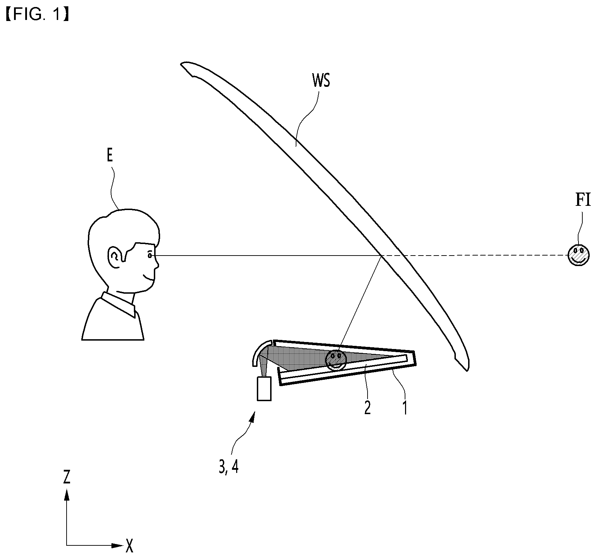

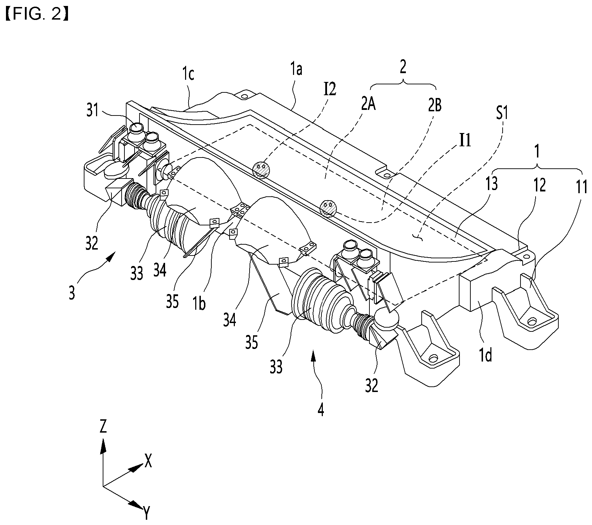

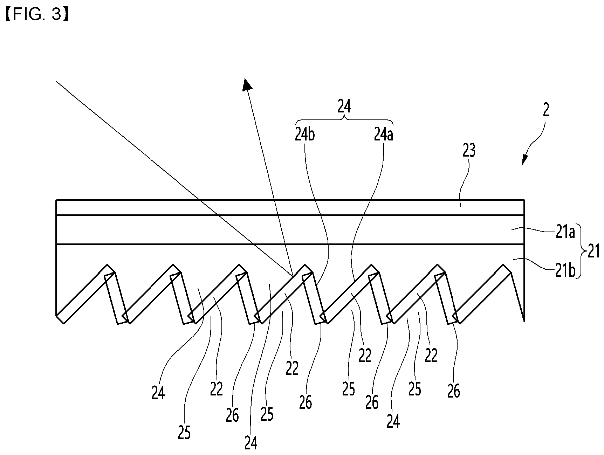

FIG. 1 is a side view illustrating a state in which one example of the head-up display according to the present embodiment displays an image, FIG. 2 is a perspective view of one example of the head-up display according to the present embodiment, and FIG. 3 is a cross-sectional view of a screen according to the present embodiment.

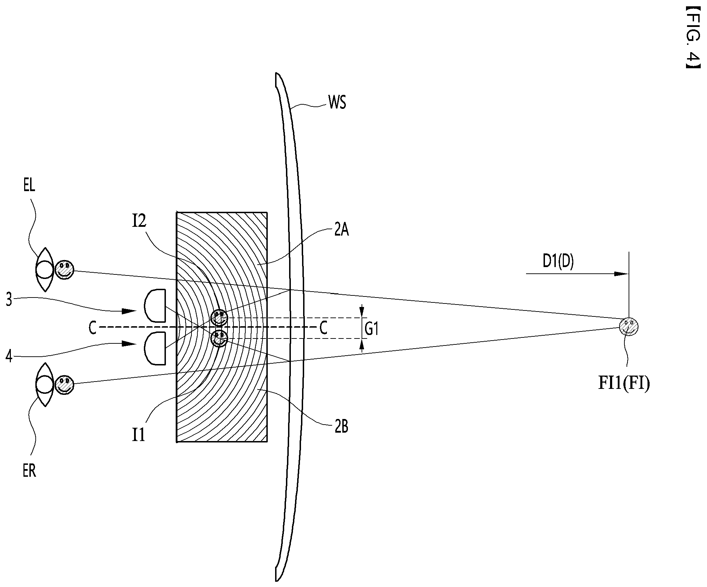

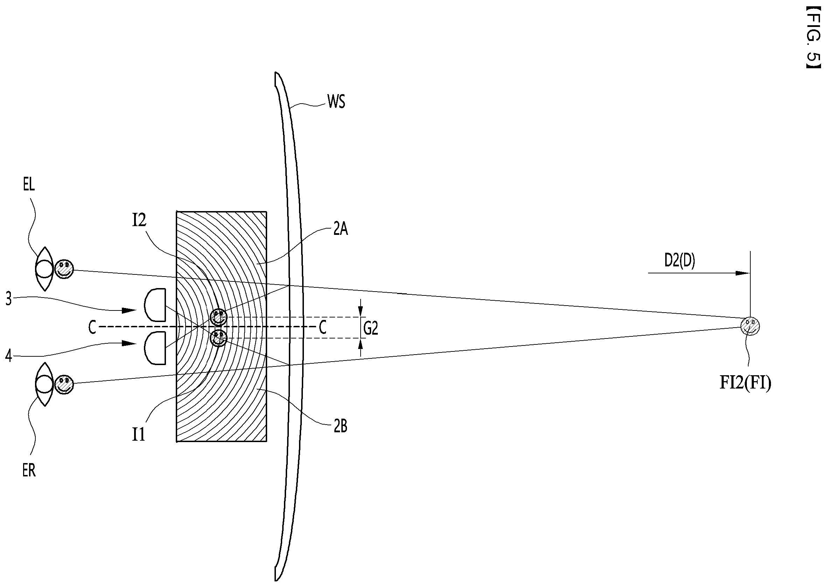

FIG. 4 illustrates a state in which a spacing between images formed on the screen according to the present embodiment is narrow, and FIG. 5 illustrates a state in which a spacing between images formed on the screen according to the present embodiment is wide.

One example of the head-up display may include a main body 1, a screen 2, and a plurality of image generation units 3 and 4.

One example of the head-up display may provide an instrument cluster (Cluster) or a Car Information Display.

One example of the head-up display may provide a Center Information Display configured to display guidance information or moving images between a driver's seat and a passenger's seat.

One example of the head-up display may provide a large-screen infotainment display for a passenger's seat or the like.

The main body 1 may form an exterior of the head-up display. The main body 1 may surround the screen 2 from an outside of the screen 2 and may protect the screen 2.

The head-up display may determine a degree of space utilization inside a vehicle, and in particular, the degree of space utilization inside the vehicle may vary according to a size and a shape of the main body 1.

The main body 1 may extend in a direction substantially orthogonal to a traveling direction of the vehicle. Here, the traveling direction of the vehicle may be defined as a front-rear direction X. The main body 1 may have a longitudinal shape substantially in a left-right direction Y. A width of the main body 1 in the front-rear direction X may be smaller than a length of the main body 1 in the left-right direction Y.

The main body 1 may be disposed on a dashboard in the left-right direction Y or may be disposed on the dashboard in an inclined direction. Here, the inclined direction may be a direction closer to the left-right direction Y than to the front-rear direction X.

When the width of the main body 1 in the front-rear direction X is small and the length of the main body 1 in the left-right direction Y is large, a space occupied by the head-up display in an internal space of the dashboard can be minimized, and the head-up display can be mounted even on a dashboard having a small width in the front-rear direction X.

The main body 1 may be eccentrically disposed on one of a left portion and a right portion of the dashboard.

When the driver's seat is provided on a left side of the vehicle, the main body 1 may be disposed on the left portion of the dashboard among the left portion and the right portion of the dashboard, and when the driver's seat is provided on a right side of the vehicle, the main body 1 may be disposed on the right portion of the dashboard among the left portion and the right portion of the dashboard.

The main body 1 may include long sides and short sides. The main body 1 may include a pair of long sides 1a and 1b and a pair of short sides 1c and 1d.

The pair of long sides may include a front long side 1a and a rear long side 1b, and the front long side 1a and the rear long side 1b may be spaced apart from each other in the front-rear direction X.

The pair of short sides may include a left short side 1c and a right short side 1d, and the left short side 1c and the right short side 1d may be spaced apart from each other in the left-right direction Y.

The main body 1 may be configured as an assembly of a plurality of members.

The main body 1 may include a housing 11 and a top cover 12.

An upper surface of the housing 11 may be open, and a space S1 may be formed inside the housing 11.

The housing 11 may include a peripheral body surrounding an outer circumference of the screen 2. The peripheral body may form a front surface, a rear surface, a right surface, and a left surface of the housing 11.

The housing 11 may include a base plate formed inside the peripheral body. The base plate may be connected to the peripheral body and may form a bottom surface of the housing 11.

A lower fastening portion may be formed on the housing 11. The lower fastening portion may be fastened to the dashboard by a fastening member such as a screw.

The housing 11 may be made of a metal material. The housing 11 may be made of AL (Aluminium).

Heat from the plurality of image generation units 3 and 4 may be transferred to the housing 11, and the housing 11 may dissipate the heat transferred from the plurality of image generation units 3 and 4. The housing 11 may be made of a metal material. The housing 11 may be a heat sink configured to dissipate the heat transferred from the plurality of image generation units 3 and 4.

The top cover 12 may be disposed above the housing 11. An upper opening through which an image passes may be formed in the top cover 12. The upper opening may be open in an up-down direction Z.

The top cover 12 may be made of polycarbonate (Polycarbonate, PC).

An upper fastening portion may be formed on the top cover 12. The upper fastening portion may be fastened to the housing 11 by a fastening member such as a screw.

A light-transmitting portion through which an image generated by the image generation unit passes may be formed in the main body 1. The light-transmitting portion may be formed in at least one of the housing 11 and the top cover 12. The light-transmitting portion may correspond to the image generation unit on a one-to-one basis.

A plurality of light-transmitting portions may be formed. The plurality of light-transmitting portions may include a first light-transmitting portion through which an image generated by one 3 of the plurality of image generation units 3 and 4 passes, and a second light-transmitting portion through which an image generated by the other 4 of the plurality of image generation units 3 and 4 passes.

The main body 1 may further include a dust cover 13.

The dust cover 13 may be disposed on the top cover 12. The dust cover 13 may be disposed on an upper surface of the top cover 12. The dust cover 13 may shield the upper opening of the top cover 12.

The dust cover 13 may cover the space S1 from above the top cover 12 and may prevent foreign substances such as dust from entering and settling into the space S1. The dust cover 13 may be attached to the top cover 12 by a double-sided tape (not shown).

The head-up display may include a control board (not shown). The control board may control an overall operation of the head-up display. The control board may be disposed on the bottom surface of the housing 11. The control board may be mounted on the base plate of the housing 11 by a fastening member such as a screw.

The main body 1 may space the screen 2 apart from the plurality of image generation units 3 and 4.

The screen 2, as illustrated in FIG. 2, may be divided into a left region 2A and a right region 2B.

At least one of an image I1 generated by the left image generation unit 3 and an image I2 generated by the right image generation unit 4 may be formed on the left region 2A of the screen 2.

At least one of the image I2 generated by the right image generation unit 4 and the image I1 generated by the left image generation unit 3 may be formed on the right region 2B of the screen 2.

The screen 2 may reflect each of the plurality of images I1 and I2 toward the windshield WS.

The images generated by the plurality of image generation units 3 and 4 may be displayed as real images on the screen 2, and the screen 2 may reflect the images toward the windshield WS.

A driver E may view a virtual image FI through the windshield WS.

The screen 2 may include a near region adjacent to the plurality of image generation units 3 and 4, and a far region distant from the plurality of image generation units 3 and 4.

The near region may be a rear portion of the screen 2 among a front portion and the rear portion of the screen 2.

The far region may be a front portion of the screen 2 among the front portion and the rear portion of the screen 2.

The screen 2 may be a directional screen, and the directional screen may have directivity for reflecting images in a specific direction.

The screen 2, as illustrated in FIG. 3, may include a Fresnel lens 21 having a Fresnel pattern formed therein, a reflection mirror 22 formed below the Fresnel lens 21, and a diffuser 23 formed on an upper surface of the Fresnel lens 21.

The Fresnel pattern may be an anisotropic Micro-Fresnel pattern.

The Fresnel lens 21 may function similarly to a convex lens, may have a reduced thickness compared with a conventional convex lens, and may be an optical component having continuous concentric grooves formed in plastic.

The Fresnel pattern may be formed on a lower surface of the Fresnel lens 21.

The Fresnel pattern may include a plurality of concentric grooves having different sizes sequentially formed and may be formed in a shape corresponding to a curvature of the windshield WS.

The Fresnel lens 21 may include a substrate 21a and a Fresnel layer 21b formed on a lower surface of the substrate 21a.

The substrate 21a may be made of plastic.

The Fresnel pattern may be formed in the Fresnel layer 21b.

Peaks 24 and valleys 25 may be alternately formed on a lower surface of the Fresnel layer 21b.

The plurality of concentric grooves constituting the Fresnel pattern may be formed by the alternately formed peaks 24 and valleys 25.

The peaks 24 may be formed such that a size thereof gradually decreases toward a lower direction. The peaks 24 may have an inverted triangular shape.

The peaks 24 may include a first surface 24a and a second surface 24b.

The first surface 24a may be an inclined surface. The second surface 24b may be an inclined surface or a vertical surface.

When both the first surface 24a and the second surface 24b are inclined surfaces, the first surface 24a may have a gentle inclination, and the second surface 24b may have a steep inclination.

The first surface 24a and the second surface 24b may be alternately formed.

The valleys 25 may be formed such that a size thereof gradually decreases toward an upper direction.

The reflection mirror 22 may be formed on the lower surface of the Fresnel layer 21b. The reflection mirror 22 may be formed on the Fresnel pattern. The reflection mirror 22 may be formed on the first surface 24a.

The reflection mirror 22 may be formed by mirror coating. The reflection mirror 22 may be a mirror coating layer formed on the first surface 24a. The reflection mirror 22 may be inclined with respect to a vertical surface.

The diffuser 23 may be formed on the upper surface of the Fresnel lens 21. The diffuser 23 may be formed by a diffusing layer formed on the upper surface of the Fresnel lens 21. The diffusing layer may be formed on the upper surface of the substrate 21a. The diffuser 23 may include a diffusing pattern.

The Fresnel lens 21 may further include an absorption layer 26; Absorption layer.

The absorption layer 26 may be a layer configured to absorb light. The absorption layer 26 may be formed on the second surface 24b.

The absorption layer 26 may be alternately formed with the reflection mirror 22.

The image may sequentially pass through the diffuser 23 and the Fresnel lens 21, may be reflected by the reflection mirror 22, may pass through the Fresnel lens 21, and may then be diffused by the diffuser 23.

The plurality of image generation units 3 and 4, as illustrated in FIG. 2, may be disposed in the main body 1. The plurality of image generation units 3 and 4 may be disposed outside the main body 1. The plurality of image generation units 3 and 4 may generate images outside the space S1 and guide the images to the screen 2.

When the plurality of image generation units 3 and 4 are disposed outside the main body 1 and the screen 2 is accommodated inside the main body 1, the size of the main body 1 can be minimized.

The plurality of image generation units 3 and 4 may be disposed on at least one of the housing 11 and the top cover 12.

The plurality of image generation units 3 and 4 may be disposed along a long side of the main body 1. The plurality of image generation units 2 and 3 may be spaced apart from each other along the long side of the main body 1.

The plurality of image generation units 3 and 4 may be disposed closer to the near region than to the far region.

The plurality of image generation units 3 and 4 may be disposed on the rear long side 1b. The plurality of image generation units 2 and 3 may be spaced apart from each other on the rear long side 1b. The plurality of image generation units 2 and 3 may be spaced apart from each other in the longitudinal direction Y of the main body 1. The plurality of image generation units 2 and 3 may be spaced apart from each other in the longitudinal direction Y of the screen 2. Each of the plurality of image generation units 3 and 4 may be eccentrically disposed in the main body 1.

Each of the plurality of image generation units 3 and 4 may be a rear image generation unit disposed on a rear surface of the body 4. The rear image generation unit may emit an image substantially in a forward direction. The rear image generation unit may project an image in the forward direction or an inclined direction.

Each of the plurality of image generation units 3 and 4 may emit an image in the forward direction or the inclined direction. Here, the inclined direction may be a forward downward direction.

The plurality of image generation units 3 and 4 may be symmetrically disposed in the left-right direction in the main body 1.

As illustrated in FIGS. 4 and 5, the plurality of image generation units 3 and 4 may be symmetrically disposed in the left-right direction with respect to a central axis C of the screen 2. The plurality of image generation units 3 and 4 may be disposed opposite to each other with respect to the central axis C of the screen 2.

The plurality of image generation units 3 and 4 may include a left image generation unit 3 and a right image generation unit 4.

The left image generation unit 3 may be eccentrically disposed on a left side of the main body 1.

The left image generation unit 3 may emit an image I1 toward at least one of the left region 2A and the right region 2B of the screen 2.

The left image generation unit 3 may emit the image I1 only toward the left region 2A of the screen 2. The left image generation unit 3 may emit the image I1 only toward the right region 2B of the screen 2. The left image generation unit 3 may emit the image I1 toward both the left region 2A and the right region 2B of the screen 2.

The left image generation unit 3 may emit the image I1 for a right eye ER of a driver.

The right image generation unit 4 may be eccentrically disposed on a right side of the main body 1.

The right image generation unit 4 may emit an image I2 toward at least one of the left region 2A and the right region 2B of the screen 2.

The right image generation unit 4 may emit the image I2 only toward the left region 2A of the screen 2. The right image generation unit 4 may emit the image I2 only toward the right region 2B of the screen 2. The right image generation unit 4 may emit the image I2 toward both the left region 2A and the right region 2B of the screen 2.

The right image generation unit 4 may emit the image I2 for a left eye EL of the driver.

The plurality of image generation units 3 and 4 may generate images on the screen 2 such that the left eye EL and the right eye ER of the driver E are cross-matched with respect to the central axis of the screen 2.

As illustrated in FIGS. 4 and 5, the plurality of image generation units 3 and 4 may form identical images I1 and I2 on the screen 2.

An example of the images emitted from the plurality of image generation units 3 and 4 may be an AR (Augmented Reality) image.

Each of the plurality of image generation units 3 and 4 may include a projection optical system.

As illustrated in FIG. 2, an example of the projection optical system may include at least one light source 31, an image generator configured to generate an image when light generated from the at least one light source 31 is incident thereon, a prism 32 configured to determine an optical path, at least one projection lens 33 through which the image generated by the image generator and passing through the prism 32 passes, and a concave mirror 34 configured to widely enlarge the image projected from the projection lens 33 in left and right directions of the screen.

An example of the image generator may include a digital micromirror device and an interposer.

At least one micromirror may be built into the digital micromirror device.

An example of the projection optical system may further include a folding mirror 35 configured to change the optical path by a right angle.

The folding mirror 35 may be disposed below the concave mirror 34. The optical path of the image passing through the projection lens 33 may be changed upward by the folding mirror 35.

Meanwhile, as illustrated in FIGS. 4 and 5, as a spacing between the images I1 and I2 formed on the screen 2 becomes narrower, a virtual image distance D may become shorter, and as the spacing between the images I1 and I2 formed on the screen 2 becomes wider, the virtual image distance D may become longer.

The virtual image distance D may be a distance from the windshield WS, the screen 2, or the driver E to the virtual image FI.

The virtual image distance D may be proportional to the spacing between the images I1 and I2 formed on the screen 2.

As illustrated in FIG. 4, when the spacing between the images I1 and I2 formed on the screen 2 is a first spacing G1, a first virtual image FI1 may be formed in front of the vehicle, and the virtual image distance D to the first virtual image FI1 may be a first virtual image distance D1.

As illustrated in FIG. 5, when the spacing between the images I1 and I2 formed on the screen 2 is a second spacing G2, which is wider than the first spacing G1, a second virtual image FI2 may be formed in front of the vehicle, and the virtual image distance D to the second virtual image FI2 may be a second virtual image distance D2, which is different from the first virtual image distance D1, and the second virtual image distance D2 may be greater than the first virtual image distance D1.

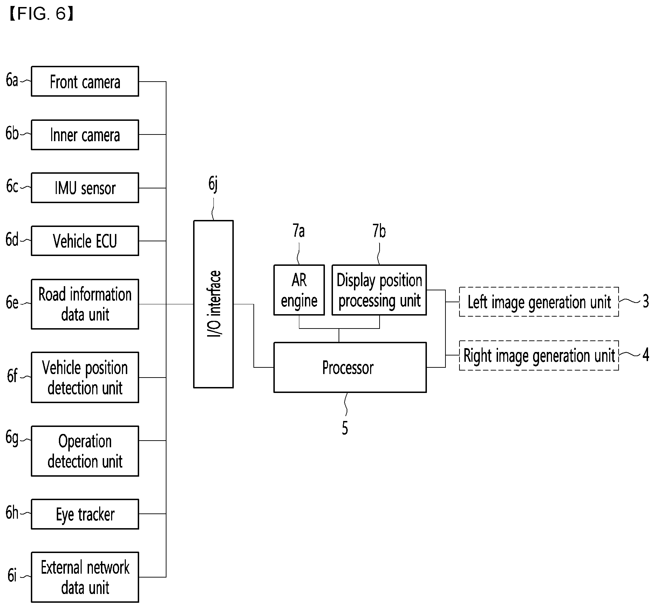

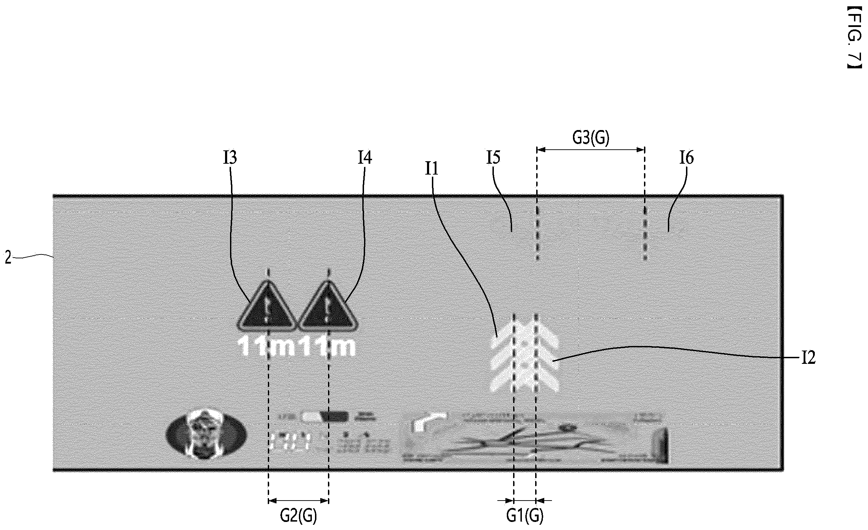

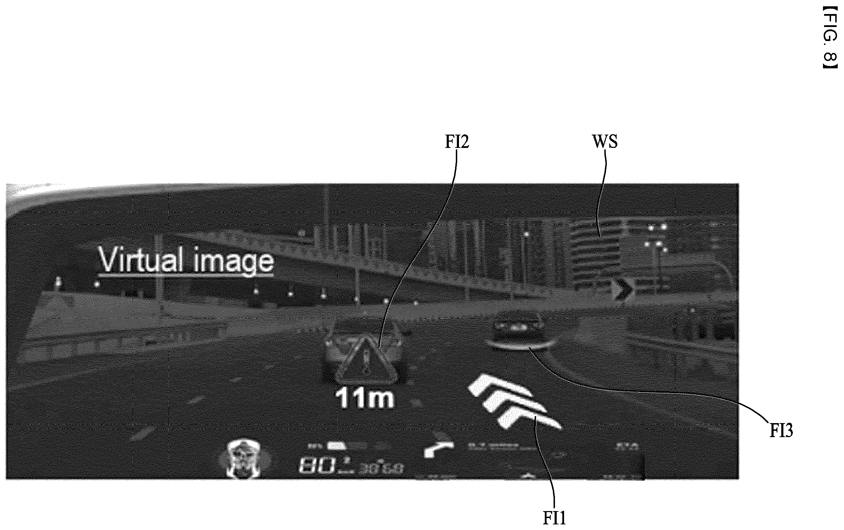

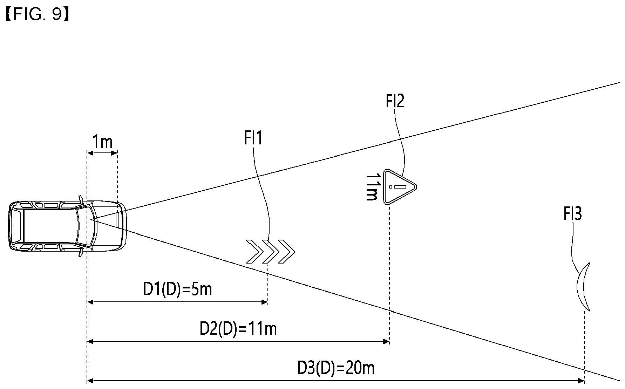

FIG. 6 is a control block diagram of the head-up display according to the present embodiment, FIG. 7 is a plan view illustrating images formed on the screen according to the present embodiment, FIG. 8 illustrates a state in which a virtual image of an object displayed by the head-up display according to the present embodiment is visible through the windshield, and FIG. 9 is a plan view illustrating a virtual image distance of the head-up display according to the present embodiment,

One example of the head-up display may further include a processor 5.

The processor 5 may control an overall operation of the head-up display.

The processor 5 may control the plurality of image generation units 3 and 4.

The processor 5 may adjust a spacing G between identical images formed on the screen 2, and may variably control a virtual image distance D.

One example of the head-up display may change a distance of a virtual image by utilizing binocular disparity.

The processor 5 may adjust the spacing G between the images formed on the screen 2 to vary the virtual image distance D in real time.

The processor 5 may control the plurality of image generation units 3 and 4 to adjust the spacing G between the identical images formed on the screen 2.

As illustrated in FIG. 6, the vehicle may include a front camera 6a configured to photograph a front side of the vehicle, an inner camera 6b configured to photograph a cabin of the vehicle, an IMU (Inertial Measurement Unit) sensor 6c configured to detect a state of the vehicle by specifying acceleration, angular velocity, and the like of the vehicle, a vehicle ECU (Electronic Control Unit) 6d configured to control various functions of the vehicle, a road information data unit 6e in which road information is stored, a vehicle position detection unit 6f configured to detect a current position of the vehicle, an operation detection unit 6g configured to detect various operations of the vehicle, an eye tracker 6h configured to track eyes of the driver E, and an external network data unit 6i configured to receive data from a network outside the vehicle.

The vehicle may further include an I/O interface 6j.

The I/O interface 6j may exchange data between the processor 5 and at least one of the front camera 6a, the interior camera 6b, the IMU (Inertial Measurement Unit) sensor 6c, the vehicle ECU (Electronic Control Unit) 6d, the road information data unit 6e, the vehicle position detection unit 6f, the operation detection unit 6g, the eye tracker 6h, and the external network data unit 6j.

The head-up display may further include an AR engine 7a and a display position processing unit 7b.

The AR engine 7a may be a software or hardware platform used to implement augmented reality technology.

The display position processing unit 7b may process a display position. The display position processing unit 7b may transmit a position at which an image is to be displayed to the processor 5, and the processor 5 may control the left image generation unit 3 and the right image generation unit 4, respectively, according thereto.

The processor 5 may communicate with the AR engine 7a and the display position processing unit 7b.

The processor 5 may control the plurality of image generation units 3 and 4, respectively, by using data received through the I/O interface 6j, the AR engine 7a, and the display position processing unit 7b.

The front camera 6a may photograph a front side of the vehicle, and the processor 5 may control the left image generation unit 3 and the right image generation unit 4 according to information photographed by the front camera 6a, and the left image generation unit 3 and the right image generation unit 4 may generate images according to the information photographed through the front camera 6a.

The processor 5 may determine a state of an object from an image received from the front camera 6a.

The processor 5 may analyze an image received through the front camera 6A to determine information of an object, determine a distance to the object, and calculate a spacing G between a plurality of images formed on the screen 2 based on a distance result to the object.

Here, examples of the object may include another vehicle positioned in front of the vehicle, a facility on a road, a pedestrian, and the like.

The processor 5 may determine a position or distance of an object positioned in front from data received from the front camera 6a or the like, and may cause a plurality of Augmented Reality images to be generated by the left image generation unit 3 and the right image generation unit 4.

When display of information related to the state of the object is required, the processor 5 may vary the spacing G between images displayed on the screen 2 according to the distance to the object based on the determined result.

The processor 5 may calculate the spacing G between the images formed on the screen 2 through the distance to the object, and may match the spacing with augmented reality.

As illustrated in FIG. 7, a plurality of identical images generated from the plurality of image generation units 3 and 4 may be displayed on the screen 2 while being spaced apart from each other, and the spacing G between the plurality of images may correspond to the virtual image distance D.

As the spacing G between the plurality of identical images becomes larger, the virtual image distance D may become farther, and as the spacing G between the plurality of identical images becomes smaller, the virtual image distance D may become nearer.

The left image generation unit 3 may emit a first image I1 to the screen 2, and the right image generation unit 4 may emit a second image I2, which is identical to the first image I1, to the screen 2.

As illustrated in FIG. 7, the first image I1 and the second image I2 may be formed on the screen 2 such that a central axis of the first image I1 and a central axis of the second image I2 have a first spacing G1.

The screen 2 may reflect the first image I1 and the second image I2 toward the windshield WS, and the driver E, as illustrated in FIG. 8, may recognize a first virtual image FI1 visible through the windshield WS.

Examples of the first image I1 and the second image I2 may be marks indicating a direction in which the vehicle should travel and the like.

An example of a distance D1 of the first virtual image FI1, as illustrated in FIG. 9, may be 5 m.

The left image generation unit 3 may emit a third image I3 to the screen 2, and the right image generation unit 4 may emit a fourth image I4, which is identical to the third image I3, to the screen 2.

As illustrated in FIG. 7, the third image I3 and the fourth image I4 may be formed on the screen 2 such that a central axis of the third image I3 and a central axis of the fourth image I4 have a second spacing G2.

The screen 2 may reflect the third image I3 and the fourth image I4 toward the windshield WS, and the driver E, as illustrated in FIG. 8, may recognize a second virtual image FI2 visible through the windshield WS.

Examples of the third image I3 and the fourth image I4 may include a warning mark indicating whether another vehicle positioned in front of the vehicle exists, and a mark indicating a distance to the other vehicle by a numerical value or the like.

An example of a distance D2 of the second virtual image FI2, as illustrated in FIG. 9, may be 11 m.

The left image generation unit 3 may emit a fifth image I5 to the screen 2, and the right image generation unit 4 may emit a sixth image I6, which is identical to the fifth image I5, to the screen 2.

As illustrated in FIG. 7, the fifth image I3 and the sixth image I4 may be formed on the screen 2 such that a central axis of the third image I5 and a central axis of the fourth image I6 have a third spacing G3.

The screen 2 may reflect the fifth image I5 and the sixth image I6 toward the windshield WS, and the driver E, as illustrated in FIG. 8, may recognize a third virtual image FI3 visible through the windshield WS.

Examples of the fifth image I5 and the sixth image I6 may include a mark indicating a state of the other vehicle positioned in front of the vehicle. Here, the state of the other vehicle may be a mark by which the driver can predict a distance in the left-right direction of the vehicle and the like.

An example of a distance of the third virtual image FI3, as illustrated in FIG. 9, may be 20 m.

The left image generation unit 3 may emit only one image among the first image I1, the third image I3, and the fifth image I5 to the screen 2, may emit two images among the first image I1, the third image I3, and the fifth image I5 together, or may emit all of the first image I1, the third image I3, and the fifth image I5 together.

The right image generation unit 4 may emit only one image among the second image I2, the fourth image I4, and the sixth image I6 to the screen 2, may emit two images among the second image I2, the fourth image I4, and the sixth image I6 together, or may emit all of the second image I2, the fourth image I4, and the sixth image I6 together.

As illustrated in FIGS. 7 and 8, the processor 5 may generate images corresponding to a plurality of objects and may calculate spacings G between the images formed on the screen 2 corresponding to the plurality of objects as different spacings G2 and G3.

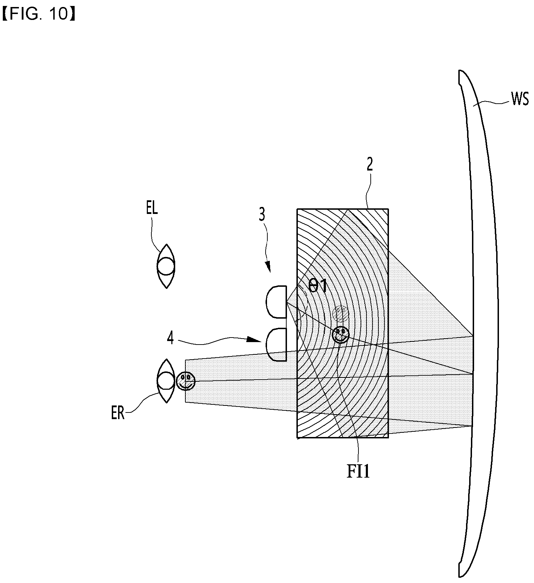

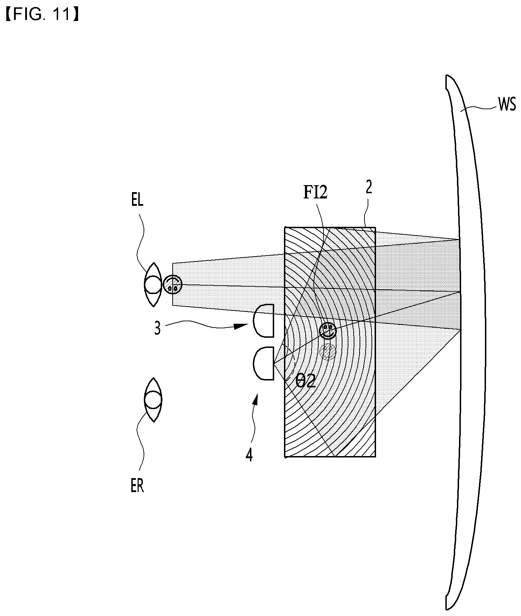

FIG. 10 is a plan view illustrating a state in which only a left image generation unit projects an image in one example of the head-up display according to the present embodiment, and FIG. 11 is a plan view illustrating a state in which only a right image generation unit projects an image in one example of the head-up display according to the present embodiment.

The processor 5 may individually control the plurality of image generation units 3 and 4.

The plurality of images formed by the plurality of image generation units 3 and 4 may have different diffusion angles θ1 and θ2 from each other.

When the left image generation unit 3 may have a first diffusion angle θ1 and the right image generation unit 4 may have a second diffusion angle θ2, the first diffusion angle θ1 and the second diffusion angle θ2 may be different from each other.

The plurality of image generation units 3 and 4 may generate images such that images of individual images correspond to the left eye EL of the driver and the right eye ER of the driver.

A near-distance image may be displayed at a near distance by an image being output only from one image generation unit among the left image generation unit 3 and the right image generation unit 4.

By utilizing the plurality of image generation units 3 and 4, images can be provided over a wider range.

As illustrated in FIG. 10, only the left image generation unit 3 among the plurality of image generation units 3 and 4 may independently generate an image, the image may be directed toward the screen 2 at the first diffusion angle θ1, the screen 2 may reflect only the image from the left image generation unit 3 toward the windshield WS, and the right eye ER of the driver may recognize the image.

As illustrated in FIG. 11, only the right image generation unit 4 among the plurality of image generation units 3 and 4 may independently generate an image, the image may be directed toward the screen 2 at the second diffusion angle θ2, the screen 2 may reflect only the image from the right image generation unit 4 toward the windshield WS, and the left eye EL of the driver may recognize the image.

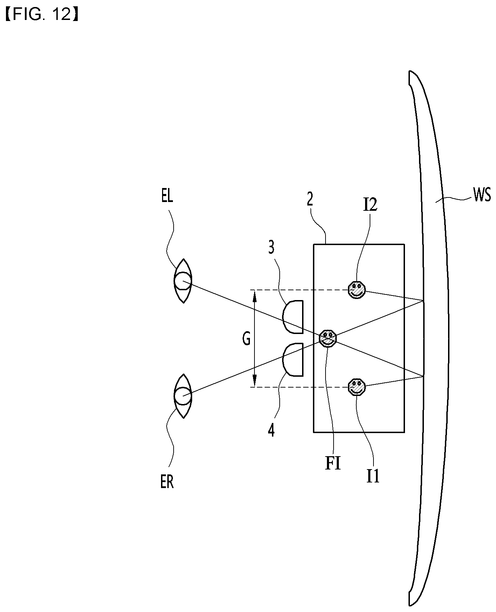

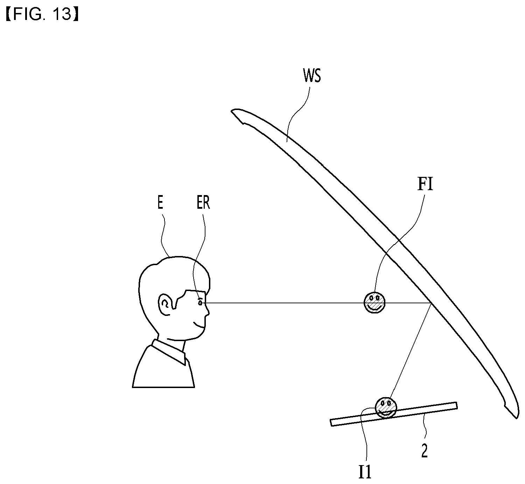

FIG. 12 is a plan view illustrating a state in which one example of the head-up display according to the present embodiment forms a virtual image between a driver and a windshield, and FIG. 13 is a side view illustrating a state in which one example of the head-up display according to the present embodiment forms a virtual image between a driver and the windshield.

The plurality of image generation units 3 and 4 may generate images on the screen 2 such that a virtual image FI is generated between the driver E and the windshield WS.

A spacing between an image I1 generated on the screen 2 by the left image generation unit 3 and an image I2 generated on the screen 2 by the right image generation unit 3 may be wide, and the virtual image FI may be formed inside the cabin.

The virtual image FI, like a 3D image, may appear as if protruding from the windshield WS toward the cabin, and utilization of the head-up display can be improved.

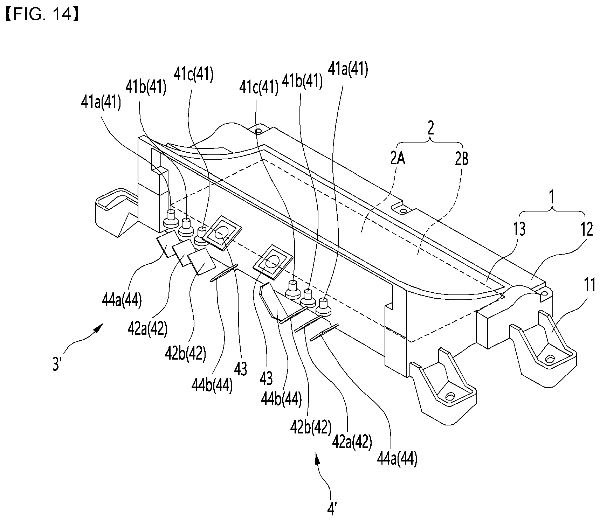

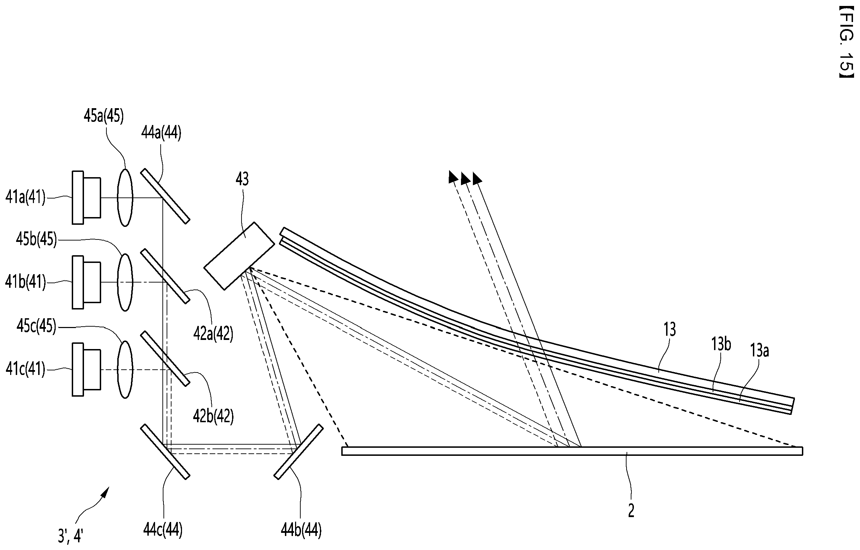

FIG. 14 is a perspective view of the other example of the head-up display according to the present embodiment, and FIG. 15 illustrates one example of a MENS optical system of the other example of the head-up display according to the present embodiment.

The other example of the head-up display according to the present embodiment includes the body 1, the screen 2, a plurality of image generation units 3' and 4', and the processor 5, and each of the plurality of image generation units 3' and 4' may include a MENS optical system.

The main body 1 may include the dust cover 13.

A quarter-wave plate (hereinafter referred to as a QWP 13a) which causes an optical path difference of 1/4 wavelength between linearly polarized lights vibrating in directions perpendicular to each other, may be provided on the dust cover 13. The QWP 13a may be provided below the dust cover 13.

A polarizing plate 13b may be provided on the dust cover 13. An example of the polarizing plate 13b may be a P-wave polarizing plate. The polarizing plate 13b may be provided below the dust cover 13.

When the QWP 13a and the polarizing plate 13b are provided together, the polarizing plate 13b may be provided on a lower surface of the dust cover 13, and the QWP 13a may be provided on a lower surface of the polarizing plate 13b.

The main body 1 may have the same or similar configuration as the main body 1 of one example of the head-up display, except for the QWP 13a and the polarizing plate 13b, and the same reference numerals are used below, and description thereof is omitted.

The screen 2 may be the same as or similar to the screen 2 of one example of the head-up display, and the same reference numerals are used below, and description thereof is omitted.

At least one of the plurality of image generation units 3' and 4' may include a MEMS optical system.

The plurality of image generation units 3' and 4' may include a left image generation unit 3' and a right image generation unit 4', as in one example of the head-up display.

Each of the left image generation unit 3' and the right image generation unit 4' may include a MEMS optical system.

The plurality of image generation units 3' and 4' may have the same other configurations as the plurality of image generation units 3 and 4 of one example of the head-up display, except for including the MEMS optical system, and description thereof is omitted below to avoid duplicated description.

The processor 5 may be the same as or similar to the processor 5 of one example of the head-up display, and the same reference numerals are used below, and description thereof is omitted.

One example of the MENS optical system may include at least one light source 41, at least one dual-band mirror 42, and a Micro Electro Mechanical Systems Scanner (hereinafter referred to as a MEMS scanner) 43. One example of the MEMS optical system may further include at least one conversion mirror 44 configured to convert an optical path.

An example of the light source 41 may be an LED diode or a laser diode.

A plurality of light sources 41 may be provided, and the plurality of light sources may include an R light source 41a configured to emit red light, a G light source 41b configured to emit green light, and a B light source 41c configured to emit blue light.

The dual-band mirror 42 may constitute a combining optical system configured to combine red light, green light, and blue light.

A plurality of dual-band mirrors 42 may be provided, and the plurality of dual-band mirrors may include a first dual-band mirror 42a and a second dual-band mirror 42b.

The first dual-band mirror 42a may be a dichroic mirror Dichroic mirror made of many thin layers of materials having different refractive indices, reflecting light of a certain color, and transmitting all light of another color.

For example, red light may pass through the first dual-band mirror 42a, and the first dual-band mirror 42a may reflect green light.

The second dual-band mirror 42b may be a dichroic mirror Dichroic mirror made of many thin layers of materials having different refractive indices, reflecting light of a certain color, and transmitting all light of another color.

For example, combined light of red light and green light may pass through the second dual-band mirror 42b, and the second dual-band mirror 42b may reflect blue light.

When combined light is incident on the MEMS scanner 43, the MEMS scanner 43 may generate an image.

A plurality of conversion mirrors 44 may be provided. The plurality of conversion mirrors may include a first conversion mirror 44a configured to reflect red light to the first dual-band mirror 42a, and a second conversion mirror 44b configured to reflect combined light to the MEMS scanner 43. The plurality of conversion mirrors may further include a third conversion mirror 44c configured to reflect combined light of red light, green light, and blue light to the second conversion mirror 44b.

As illustrated in FIG. 15, the MEMS optical system may include at least one collimating lens 45 configured to collect light.

A plurality of collimating lenses 45 may be provided. The plurality of collimating lenses may include a first collimating lens 45a disposed between the R light source 41a and the first conversion mirror 44a and configured to collect light, a second collimating lens 45b disposed between the G light source 41b and the first dual-band mirror 42a and configured to collect light, and a third collimating lens 45c disposed between the B light source 41c and the second dual-band mirror 42b and configured to collect light.

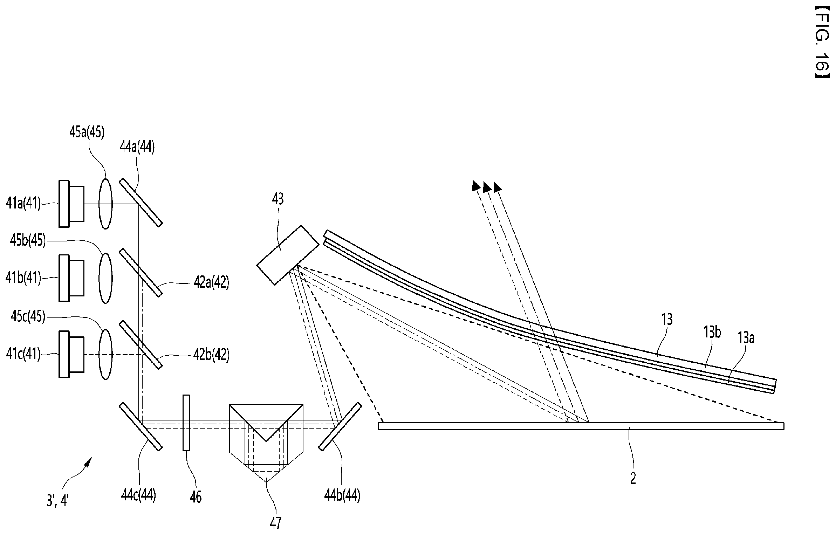

FIG. 16 illustrates a modified example of the MENS optical system of the other example of the head-up display according to the present embodiment.

The modified example of the MENS optical system may further include a sub quarter-wave plate 46 and a prism 47, in addition to the configuration of one example of the MENS optical system.

Among the configurations of the modified example of the MENS optical system, the same reference numerals are used for configurations identical to those of one example of the MENS optical system to avoid duplicated description, and description thereof is omitted.

The sub quarter-wave plate 46, like the quarter-wave plate 13a of one example of the MENS optical system, may cause an optical path difference of 1/4 wavelength between linearly polarized lights vibrating in directions perpendicular to each other, and will be described below as a sub QWP 46.

The sub QWP 46 may be disposed in an optical path of the modified example of the MENS optical system. The sub QWP 46 may be disposed between the dual-band mirror 42 or the prism 47, or may be disposed between the third conversion mirror 44c and the prism 47.

An example of the prism 47 may be a Polarizing Beam Splitter Prism configured to divide incident light into two separate lights according to a polarization state.

The prism 47 may be disposed in the optical path of the modified example of the MENS optical system. The prism 47 may be disposed between the sub QWP 46 and the second conversion mirror 44b.

The above description is merely an illustrative explanation of the technical idea of the present disclosure, and various modifications and variations will be possible to those skilled in the art without departing from the essential characteristics of the present disclosure.

Accordingly, the embodiments disclosed in the present disclosure are not intended to limit the technical idea of the present disclosure, but are for illustrative purposes, and the scope of the technical idea of the present disclosure is not limited by these embodiments.

The scope of protection of the present disclosure should be interpreted in accordance with the claims below, and all technical ideas within the equivalent scope should be interpreted as being comprised in the scope of rights of the present disclosure.

## Claims

1. A head-up display, comprising:
a main body;
a plurality of image generation units disposed on the main body;
a screen on which a plurality of images generated by the plurality of image generation units are formed and which reflects the plurality of images toward a windshield; and
a processor configured to control the plurality of image generation units,
wherein the plurality of image generation units form an identical image on the screen, and
wherein the processor adjusts a spacing between the identical images formed on the screen to variably control a virtual image distance.

2. The head-up display according to claim 1,
wherein the plurality of image generation units are spaced apart from each other along a longitudinal side of the main body.

3. The head-up display according to claim 1,
wherein each of the plurality of image generation units is eccentrically disposed on the main body.

4. The head-up display according to claim 1,
wherein the plurality of image generation units are disposed opposite to each other along a longitudinal side of the main body with respect to a central axis of the screen.

5. The head-up display according to claim 1,
wherein the plurality of image generation units generate images on the screen such that a left eye of a driver and a right eye of the driver are cross-matched with respect to a central axis of the screen.

6. The head-up display according to claim 1,
wherein the plurality of image generation units generate images on the screen such that a virtual image is generated between a driver and a windshield.

7. The head-up display according to claim 1,
wherein the plurality of images have different diffusion angles from each other, and
wherein the plurality of image generation units generate images such that images of individual images respectively correspond to a left eye of a driver and a right eye of the driver.

8. The head-up display according to claim 1,
wherein the processor determines a state of an object from an image received from a front camera, and
when display of information related to the state of the object is required, variably changes the spacing between images displayed on the screen according to a distance to the object based on a determined result.

9. The head-up display according to claim 1,
wherein a plurality of identical images generated from the plurality of image generation units are displayed on the screen while being spaced apart from each other, and
wherein the spacing between the plurality of images corresponds to the virtual image distance.

10. The head-up display according to claim 9,
wherein, as the spacing becomes larger, the virtual image distance becomes farther, and
wherein, as the spacing becomes smaller, the virtual image distance becomes nearer.

11. The head-up display according to claim 1,
wherein the processor adjusts the spacing between images formed on the screen to variably change the virtual image distance in real time.

12. The head-up display according to claim 1,
wherein the processor analyzes an image received through a front camera to determine information of an object, determines a distance to the object, and calculates the spacing between a plurality of images formed on the screen based on a result of the distance to the object.

13. The head-up display according to claim 1,
wherein the processor generates images corresponding to a plurality of objects and calculates spacings between the images formed on the screen corresponding to the plurality of objects as different spacings.

14. The head-up display according to claim 1,
wherein each of the plurality of image generation units comprises a projection optical system.

15. The head-up display according to claim 1,
wherein each of the plurality of image generation units comprises a MENS optical system.
